# EUROPEAN PATENT SPECIFICATION

(11) **EP 1 949 720 B1**
(45) Date of publication and mention of the grant of the patent: **21.10.2015**
(21) Application number: 06809177.6
(22) Date of filing: 02.11.2006
(51) Int. Cl.: H04W 24/10, H04W 76/04

(54) **APPARATUS, METHOD AND COMPUTER PROGRAM PRODUCT PROVIDING AUTOMATICALLY ADJUSTED TIME PERIODS USED FOR EVENT EVALUATION**
VORRICHTUNG, VERFAHREN UND COMPUTERPROGRAMMPRODUKT ZUR BEREITSTELLUNG VON ZUR EREIGNISEVALUIERUNG VERWENDETEN AUTOMATISCH JUSTIERTEN ZEITPERIODEN
APPAREIL, PROCEDE ET PRODUIT-PROGRAMME INFORMATIQUE FOURNISSANT DES PERIODES A AJUSTEMENT AUTOMATIQUE UTILISEES POUR L'EVALUATION D'EVENEMENTS

(30) Priority: 02.11.2005 US 733158 P
(43) Date of publication of application: 30.07.2008
(73) Proprietor: Nokia Technologies Oy, 02610 Espoo (FI)
(72) Inventor: DALSGAARD, Lars, FIN-90230 Oulu (FI); NIELSEN, Sari, FIN-02750 Espoo (FI); KOSKELA, Jarkko, FIN-90500 Oulu (FI)
(74) Representative: Nokia Corporation
(86) International application number: PCT/IB2006/003098
(87) International publication number: WO 2007/052141

(56) References cited:
- EP-A1- 1 641 297
- EP-A1- 1 677 564
- WO-A1-00/13377
- US-A1- 2002 068 571
- US-A1- 2004 043 769

## Description

### TECHNICAL FIELD

The exemplary and non-limiting embodiments of this invention relate generally to wireless communication systems and, more specifically, relate to techniques for user equipment to measure signals and report the measurements to a wireless network, including when it is necessary to report some measurements and events related to the measurements.

### BACKGROUND

Certain abbreviations that are found herein are defined as follows:
- 3GPP: third generation partnership project
- UE: user equipment
- NW: network
- DRX: discontinuous reception
- DTX: discontinuous transmission
- PS: packet scheduling
- NC: network controlled
- LTE: long term evolution
- RRC: radio resource control
- RNC: radio network controller
- DCH: dedicated channel

One potential problem related to current discontinuous reception/transmission and packet scheduling concepts being developed is that these concepts are based on a very flexible discontinuous reception/transmission and packet scheduling scheme to allow the user equipment to save power when neither data reception (RX) nor transmission (TX) is scheduled for the user equipment. The user equipment typically enters a discontinuous mode (e.g., as opposed to a continuous mode) of reception or transmission. Discontinuous data reception typically means that neighbor cell measurements performed by the user equipment are also impacted, as user equipment-based measurements (e.g., especially intra-frequency measurements) normally are scheduled in the user equipment to be performed at the same time that reception or transmission is to occur. This scheduling is due to power saving. A current packet scheduling scheme has a side effect that the user equipment-based measurement can occur in an unpredictable manner.

As it is expected that in the LTE (also called 3.9G) concept, no RRC state change is required for the user equipment to begin using discontinuous reception/transmission, the change of certain parameter (such as Time-to-Trigger or Treselection parameters, described below) values generally should not be simply tied to state changes. Instead, another approach is required. The foregoing problems have not yet been addressed in 3.9G.

However, previously in 2G and 3G systems the same or a similar problem has been addressed. In 3G, where Time-to-Trigger and Treselection parameters and concepts were introduced, there is no RRC state, where the user equipment is occasionally required to receive data without interruption due to discontinuous reception (e.g., DRX) and while during some other moments it is allowed to use discontinuous reception for power saving purposes. This means that power saving benefits can be achieved without state transitions.

In the 2G systems, the measurement reporting by the user equipment in a dedicated mode is periodic and is based on time. In this state, no hysteresis or Time-to-Trigger approach is used. For example, a measurement report is sent every 0.48 second (excluding a Fast Power Control operation, which is also timer based). In a case where the user equipment is GPRS attached, the user equipment may be ordered to perform network controlled measurements. In this case, the measurement reporting to the network is controlled by a NC_REPORTING_PERIOD timer. This timer may vary depending on whether the user equipment is in transfer or idle mode. The timer value given by the network is used by the user equipment until a new value is received, with the exception that if the time for reporting in idle is shorter than the discontinuous reception time, the user equipment uses the discontinuous reception time as the reporting time interval.

3G measurement reporting may be based on an event trigger, which also includes a Time-to-Trigger parameter for some short time-domain "hysteresis". Without the Time-to-Trigger parameter, a user equipment would immediately report a measurement (e.g., of power level of a signal being received) when the measurement meets certain criteria, which typically involves the measurement (or measurements) being beneath some threshold for some period of time. The Time-to-Trigger parameter provides a time period during which an evaluation may be made as to whether the measurement meets the criteria. This Time-to-Trigger time period therefore reduces reporting of events caused when, e.g., a signal level temporarily dips below a threshold. The Time-to-Trigger parameter is signaled to the user equipment by the network. The network signals only one Time-to-Trigger parameter at a time, and the user equipment uses that parameter until a new Time-to-Trigger parameter value is signaled to the user equipment.

In addition to the Time-to-Trigger parameter for event-triggered reporting in the CELL_DCH, 3G has the Treselection parameter for cell reselection purposes in the Idle mode and the CELL_PCH, URA_PCH and CELL_FACH states. The Treselection parameter is broadcast to the user equipment in the System Information. In the first releases of 3G, one Treselection parameter was defined for the Idle mode and another for RRC-connected modes, where cell reselections are performed (i.e., CELL_PCH, URA_PCH and CELL _FACH). In the later releases, CELL/URA_PCH and CELL_FACH Treselection parameters were separated from each other, such that during CELL_PCH/URA_PCH states the user equipment may utilize discontinuous reception, and in the case of discontinuous reception the user equipment does not perform continuous measurements. The discontinuous reception cycle length is also likely to affect the measurement activity, as allowed by 3GPP TS 25.133. In the CELL_FACH state, however, the user equipment cannot utilize discontinuous reception and the continuous neighbor measurements are also required.

In WO00/3377, the invention concerns a mobile station and a method of controlling cell idle-mode re-selection measurements in a mobile station in a mobile communication system comprising base stations where a base station defines a cell, and a mobile station for communicating with at least one base station, in which method when the mobile station is in idle mode, the mobile station monitors paging messages coming from the base station informing the mobile station of possible transmissions to come, the paging messages arrive at certain intervals, the interval defining a discontinous reception period (DRX period), and further in idle mode the mobile station (MS) performs cell reselection measurements on certain channels. The number of cell re-selection measurements (Proposal) is proportional to the length of the DRX period, whereby during a longer DRX period a higher number of cell re-selection measurements is performed than during a shorter DRX period.

US2004/0043769 presents techniques for limiting cell reselection in response to a variable channel are disclosed. In one aspect, a measurement of received pilot power from a base station is used as an indication of channel quality. In another aspect, hysteresis is applied to limit cell reselection, wherein the hysteresis is greater in relatively higher quality channel environments and lower in relatively lower channel quality environments.

While all of these different parameters and corresponding time periods used for evaluation are useful, it is beneficial to adjust the parameters and corresponding time periods in ways not previously performed.

### BRIEF SUMMARY

In an exemplary embodiment of the invention, a method is disclosed that includes determining a first time period during which evaluation should be performed of whether a received radio frequency signal meets at least one criterion, the first time period based at least partially on a second time period of discontinuous reception or transmission. The method also includes performing the evaluation of the received radio frequency signal using measurements obtained within the first time period, and determining, based on the evaluation, whether an event should be triggered. The method further includes triggering the event in response to a determination that the event should be triggered.

In an additional embodiment, a computer program product is disclosed that tangibly embodies a program of machine-readable instructions executable by a digital processing apparatus to perform operations. The operations include determining a first time period during which evaluation should be performed of whether a received radio frequency signal meets at least one criterion. The first time period is based at least partially on a second time period of discontinuous reception or transmission. The operations also include performing the evaluation of the received radio frequency signal using measurements obtained within the first time period. The operations further include determining, based on the evaluation, whether an event should be triggered, and triggering the event in response to a determination that the event should be triggered.

In another exemplary embodiment, an apparatus is disclosed that comprises circuitry configured to determine a first time period during which evaluation should be performed of whether a received radio frequency signal meets at least one criterion. The first time period is based at least partially on a second time period of discontinuous reception or transmission. The circuitry is configured to perform the evaluation of the received radio frequency signal using measurements obtained within the first time period. The circuitry is further configured to determined, based on the evaluation, whether an event should be triggered, and to trigger the event in response to a determination that the event should be triggered.

In another exemplary embodiment, a method is disclosed that includes, in order to perform an evaluation of whether a received radio frequency signal meets at least one criterion, using a first time period for performing the evaluation in a continuous mode and a second time period for performing the evaluation in a discontinuous mode. The method includes in response to being in the continuous mode, performing the evaluation of the received radio frequency signal using measurements corresponding to the first time period and, in response to being in the discontinuous mode, performing the evaluation of the received radio frequency signal using measurements corresponding to the second time period. The method also includes determining, based on the evaluation, whether an event should be triggered, and triggering the event in response to a determination that the event should be triggered.

### BRIEF DESCRIPTION OF THE DRAWINGS

The foregoing and other aspects of embodiments of this invention are made more evident in the following Detailed Description of Exemplary Embodiments, when read in conjunction with the attached Drawing Figures, wherein:
FIG. 1 shows a simplified block diagram of various electronic devices that are suitable for use in practicing the exemplary embodiments of this invention.
FIG. 2 is a graph that illustrates how event-triggered reporting may behave differently if a Time-to-Trigger type of time hysteresis is not adjusted to discontinuous reception/transmission cycles.
FIG. 3 illustrates exemplary communications between a base station and a user equipment.
FIGS. 4 and 5 are flowcharts of an exemplary method performed by a user equipment for automatically adjusting a time period used for event evaluation.
FIG. 6 is a block diagram of circuitry suitable for implementing embodiments of the disclosed invention.

### DETAILED DESCRIPTION OF EXEMPLARY EMBODIMENTS

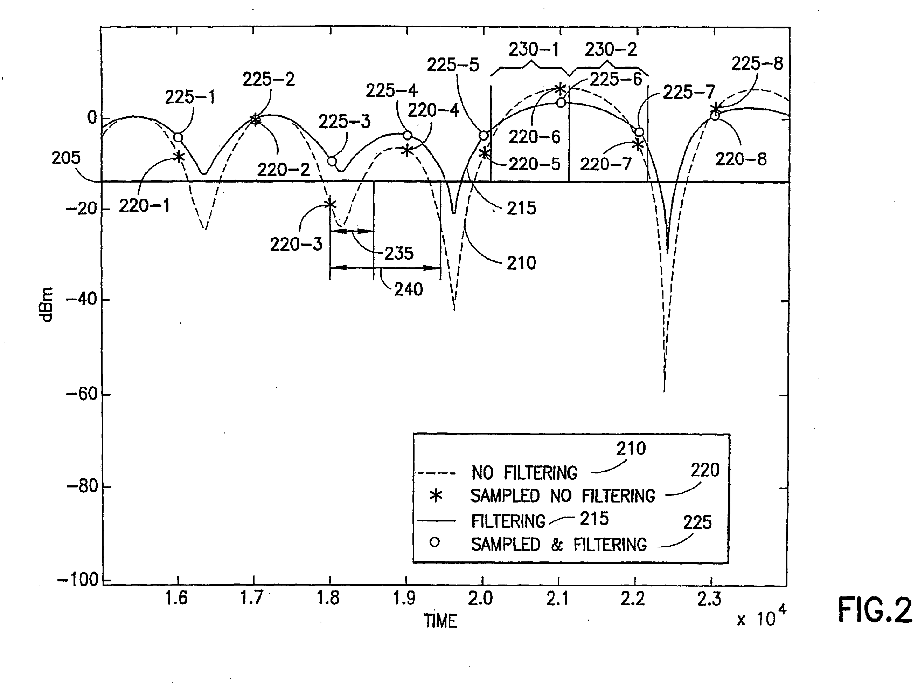

In order to ensure that user equipment reporting and, potentially, also cell reselections and handover operations are correctly triggered under time variant radio conditions, both in the discontinuous reception/transmission cases and in cases where continuous neighbor measurements are required, it would be desirable to have different time domain hysteresis characteristics for triggering handover events to the network and, potentially, also cell reselections (depending on the selected concept in 3GPP). One reason for this approach (as described in more detail in reference to FIG. 2) would be to ensure that potential triggers would not be based on, e.g., only one measurement sample, a condition that could possibly occur if the user equipment is using, e.g., a long discontinuous reception cycle and a short Time-to-Trigger value. Further, it can be noted that, from a system perspective, it is desirable to define different Treselection parameters for both the discontinuous reception case and the non-discontinuous reception case (e.g., the continuous reception case). Additionally, the network may tune its Treselection parameter value for the selected discontinuous reception cycle.

It is noted that primary disclosure herein is placed on the Time-to-Trigger parameter. However, aspects of the disclosed invention are also application to other items (such as parameters and associated values) controlling time periods during which an evaluation of a signal is to be performed, such as the Treselection parameter and packet scheduling.

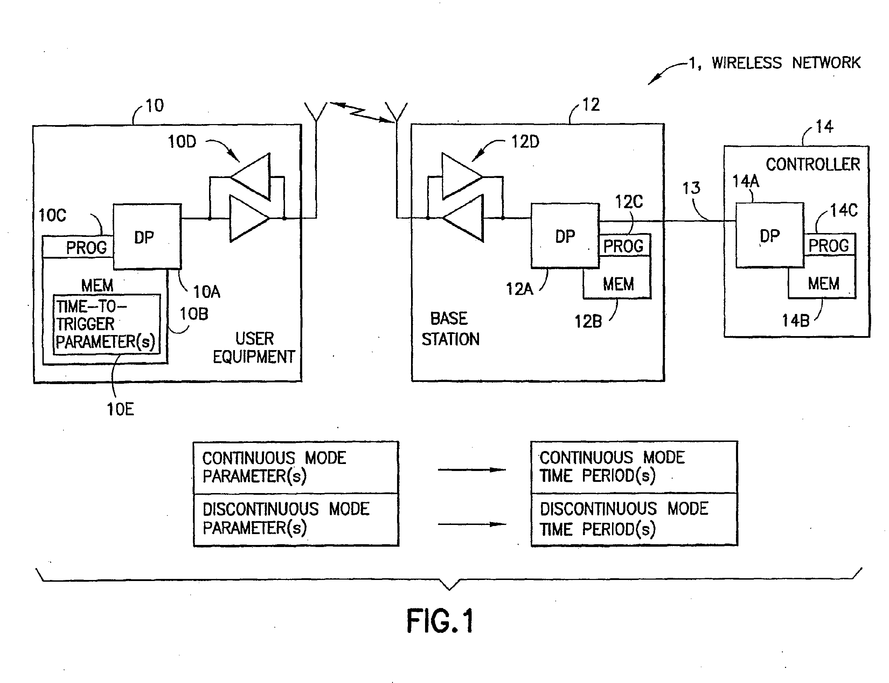

Reference is made first to FIG. 1 for illustrating a simplified block diagram of various electronic devices that are suitable for use in practicing the exemplary embodiments of this invention. In FIG. 1, a wireless network 1 is adapted for bidirectional communication with a user equipment 10 via a base station 12 (e.g., a Node B, base transceiver station). Also shown is an exemplary controller 14 (e.g., an RNC, base station controller) of the wireless network 1. The user equipment 10 includes a data processor (DP) 10A, a memory (MEM) 10B that stores a program (PROG) 10C, and a suitable radio frequency (RF) transceiver 10D for bidirectional wireless communications with the base station 12, which also includes a data processor 12A, a memory 12B that stores a program 12C, and a suitable RF transceiver 12D. The base station 12 is coupled via a data path 13 to the controller 14 that also includes a data processor 14A and a memory 14B storing an associated program 14C. The programs 10C, 12C, and 14C are assumed to include any program instructions that, when executed by the associated data processor, enable the electronic device to operate in accordance with the exemplary embodiments of this invention, as will be discussed below in greater detail.

The user equipment 10 also includes Time-to-Trigger parameter(s) 10E, which in an exemplary embodiment include continuous mode parameter(s) 10F and discontinuous mode parameter(s) 10G. In an exemplary embodiment, the user equipment 10 uses the continuous mode parameter(s) 10F to determine corresponding continuous mode time period(s) 10H that are used during evaluation of events for the continuous mode. Similarly, the user equipment 10 uses the discontinuous mode parameter(s) 10G to determine corresponding discontinuous mode time period(s) 10J that are used during evaluation of events for the discontinuous mode. The evaluations correspond to one or more radio frequency signals. The events include, e.g., measurement reporting, cell reselection operations, and handover operations. In one example, a time period 10H has a value different from a time period 10J. In another example, there are multiple discontinuous mode parameters 10G, each discontinuous mode parameter 10G corresponding to one or more discontinuous cycles. In other examples, the parameters 10F or 10G are equivalent to the time periods 10H, 10J, and the time periods 10H, 10J are not used. These concepts are explained in more detail below.

In general, the various embodiments of the user equipment 10 can include, but are not limited to, cellular phones, personal digital assistants (PDAs) having wireless communication capabilities, portable computers having wireless communication capabilities, image capture devices such as digital cameras having wireless communication capabilities, gaming devices having wireless communication capabilities, music storage and playback appliances having wireless communication capabilities, Internet appliances permitting wireless Internet access and browsing, as well as portable units or terminals that incorporate combinations of such functions.

The embodiments of this invention may be implemented by computer software executable by the data processor 10A of the user equipment 10 and the other data processors, or by hardware, or by a combination of software and hardware. It is also noted that the memories 10C, 12C, and 14C can include a computer program product tangibly embodying a program of machine-readable instructions executable by a digital processing apparatus to perform operations herein. The computer program product may also include compact disks, digital versatile disks, memory sticks, and any other device for holding information.

The memories 10B, 12B, and 14B may be of any type suitable to the local technical environment and may be implemented using any suitable data storage technology, such as semiconductor-based memory devices, magnetic memory devices and systems, optical memory devices and systems, fixed memory and removable memory. The data processors 10A, 12A, and 14A may be of any type suitable to the local technical environment, and may include one or more of general purpose computers, special purpose computers, microprocessors, digital signal processors (DSPs) and processors based on a multi-core processor architecture, as non-limiting examples.

FIG. 2 illustrates a manner in which events may be reported to the network differently if the same Time-to-Trigger value is used both for the non-discontinuous reception and discontinuous reception cases. In FIG. 2, the following information is shown: a graph 210 of continuous measurements without filtering; a plot of samples 220, including samples 220-1 through 220-8, that is a sampled version of graph 210; a graph 215 of continuous measurements with filtering; and a plot of samples 225, including samples 225-1 through 225-8, that is a sampled version of graph 215. The time scale is in terms of sample counts, but the time scale could be expressed in seconds, milliseconds, etc. It is noted that the filtered version may be produced by using analog filter(s), digital filter(s), or both. The graphs 210, 215 represent signal levels (in this case, power levels) for a signal being examined by the user equipment 10, such as a signal corresponding to a channel from a cell being observed by the user equipment 10. During continuous or discontinuous modes, the user equipment 10 could be observing channels from the cell to which the user equipment 10 is currently assigned or to other cells.

Typically, a Time-to-Trigger parameter has a value equivalent to the time period 235, and the Time-to-Trigger parameter is given by the network 1 to the user equipment 10. It is shown below that it is beneficial to determine further a Time-to-Trigger parameter based on a discontinuous cycle in a discontinuous mode. In a discontinuous mode, typically no continuous reception (e.g., to the user) or transmission (e.g., from the user) of data is occurring. Signal level measurements will generally occur at pre-determined time intervals e.g. continuously if continuous data transmission is ongoing or discontinuously (e.g. at every DRX timeout) if data transmission is discontinuous. For instance, a user equipment 10 will generally estimate the power level of certain pilots (e.g., pilot symbols) which are transmitted from base stations 12 with known power level. In this example, the Time-to-Trigger parameter based on a discontinuous cycle has a value equivalent to the time period 240. Two exemplary discontinuous cycles 230-1 and 230-2 are shown, although each sample 220, 225 corresponds to a discontinuous cycle. The user equipment 10 is in the discontinuous mode of reception (e.g., or transmission) during the discontinuous cycles 230-1 and 230-2. It is noted that the discontinuous cycles 230 can be equivalent to discontinuous states of the user equipment 10. However, as described above, some implementations such as 3.9G do not use discontinuous states and therefore state transitions are not useful for determining time periods such as time period 240.

During the discontinuous cycles 230, power level determinations are made for the signals corresponding to the graph 210, 215. The power level determinations correspond to samples 220-6 and 225-6 in discontinuous cycle 230-1 and samples 220-7 and 225-7 in discontinuous cycle 230-2. It is noted that other characteristics of signals may also be used, such as signal-to-noise ratios.

One exemplary aspect of this invention is to assure that the Time-to-Trigger period is based on the currently used/ordered discontinuous reception/transmission period. This implies that the Time-to-Trigger timer is made a function of the discontinuous reception/transmission cycle 230 (e.g., is made a function of a possible user equipment sleep interval).

More specifically, FIG. 2 illustrates how event-triggered reporting may behave differently if Time-to-Trigger type of time hysteresis is not adjusted to the discontinuous reception/transmission cycles. The continuous graphs 210,215 represent cases where no discontinuous reception is used (i.e., continuous measurements are made in a continuous mode) and the '*' and 'o' samples 220, 225 (respectively) represent discontinuous measurements due to discontinuous reception. The sampling rate of the samples 220, 225 may be assumed for convenience to be the same as the length of a discontinuous reception cycle 230.

That is, FIG. 2 shows how event-triggered reporting with Time-to-Trigger time domain hysteresis may vary between continuous and discontinuous measurement modes of operation, unless the Time-to-Trigger value is adjusted to correspond to the discontinuous reception cycle 230. Continuous measurements without filtering (e.g., illustrated by graph 210) would not trigger an event by the user equipment to the network, because the time period 235 (corresponding to a Time-to-Trigger parameter) includes a signal power level above the threshold 205. In other words, the evaluation of the signal corresponding to the graph 210 over the time period 235 would not cause an event such as reporting the measurement. However, sampled results without filtering would trigger an event. This is true because the only sample 220-3 in the time period 235 is beneath the threshold 205, and an evaluation of the signal 210 in this period would indicate too low of a power level.

In accordance with exemplary embodiments of this invention, by making the Time-to-Trigger time value dependent on the current discontinuous reception/transmission cycle 230 it can be assured that for whatever measurement reporting operation(s) that depend on the Time-to-Trigger time, the user equipment 10 is always capable of obtaining a minimum number of necessary measurements, even when utilizing discontinuous reception (and DTX) for power saving purposes. Thus, the time period 240 is based on the discontinuous cycle 230, as is described in more detail below. Because the time period 240 includes the sample 220-4, an evaluation of power level of the signal 210 typically would not indicate that power level was beneath the threshold 205. It should be noted that the evaluation might depend on the particular algorithm being used. It should be kept in mind that neighbor measurements are normally continuously performed by the user equipment 10 when the user equipment 10 is awake due to the reception and transmission of data. This is especially true for intra-frequency measurements in a frequency reuse = 1 ("reuse equals one") system.

If the Time-to-Trigger value is too short compared to the interval when the user equipment 10 performs measurements of power levels of signals from identified cells, the Time-to-Trigger would not provide any additional time domain hysteresis to the filtered and sampled measurement results (e.g., samples 220). However, when the user equipment 10 is continuously active (i.e., in the continuous state, as illustrated by graphs 210,215), and also makes accurate measurements, there is generally no need to have a long Time-to-Trigger value. Furthermore, it is desirable to avoid unnecessarily long Time-to-Trigger values when the user equipment 10 performs continuous neighbor measurements in order to keep handover delays as short as possible. Otherwise, handover performance may be degraded unnecessarily.

It should be noted that the evaluation (and corresponding criteria requirements) might depend on the particular algorithm being used. For instance, it is possible that an event-driven handover procedure could be implemented by the user equipment 10 conducting handover measurements periodically with a "measurement interval". The collected measurements results might be averaged over a sliding window, with a "sliding window size". New averaged measurement results are always obtained after a step of a "sliding window step". If the averaged measurement results satisfy given handover evaluation criteria continuously for "Time-to-Trigger" period of time, the user equipment 10 will send a measurement report to the network, which then initiates the actual hard handover execution.

It is noted that the time period 235 shown in FIG. 2 could be considered herein as a continuous mode time period 10H, and the time period 240 could be considered a discontinuous mode time period 10J. This is true because typically the continuous mode time period 10H will be shorter than the discontinuous mode time period 10J.

In the current 3G concept, the Time-to-Trigger is based on a fixed value set by the network 1 (e.g., the base station 12 or controller 14) and signaled to (by the base station 12) the user equipment 10. The value may change over time, and may depend on the ongoing connection, but this requires explicit signaling between the network 1 and the user equipment 10. Additionally, the network 1 is not likely to have the necessary information for changing the Time-to-Trigger parameter unless, for example, a different parameter value is needled in certain cells due to special radio conditions.

In accordance with exemplary embodiments of this invention, the network 1 need not signal the Time-to-Trigger value to user equipment 10, but instead the user equipment 10 determines the value itself based on certain information, such as a current packet schedule or discontinuous reception/transmission schedule. The user equipment-determined Time-to-Trigger value(s) is shown stored in FIG. 1, for convenience, in the memory 10B of the user equipment 10. The manner in which the user equipment 10 defines its Time-to-Trigger parameter value in different cases is dependent on how the network 1 has set and/or signaled other relevant parameters that are used for defining the Time-to-Trigger parameter with no discontinuous reception/transmission, and with different discontinuous reception cycles 230. This implies that the network 1 has still has overall control and knowledge of the Time-to-Trigger parameter that the user equipment 10 uses.

There are a number of techniques for associating the Time-to-Trigger parameter value with the discontinuous reception cycle (including no discontinuous reception). These include, but need not be limited to, the following.

First, an algorithm may be defined in the relevant specifications for use by the user equipment 10 in calculating the Time-to-Trigger parameter value. This algorithm may have input parameters that are provided in the measurement control (e.g., broadcast type of measurement control or dedicated measurement control) message(s).

Second, different Time-to-Trigger parameter values may be given for different discontinuous reception cycles, but all of these values may be given at once in one measurement control message to avoid having to signal new parameter values when the user equipment 10 changes its discontinuous reception cycle.

This method of defining the Time-to-Trigger parameter reduces signaling overhead and allows the network 1 to use the same measurement control information for several or even all user equipments 10 that are active in the cell (or camped on the cell in the case where one considers as well the Treselection parameter for cell reselection).

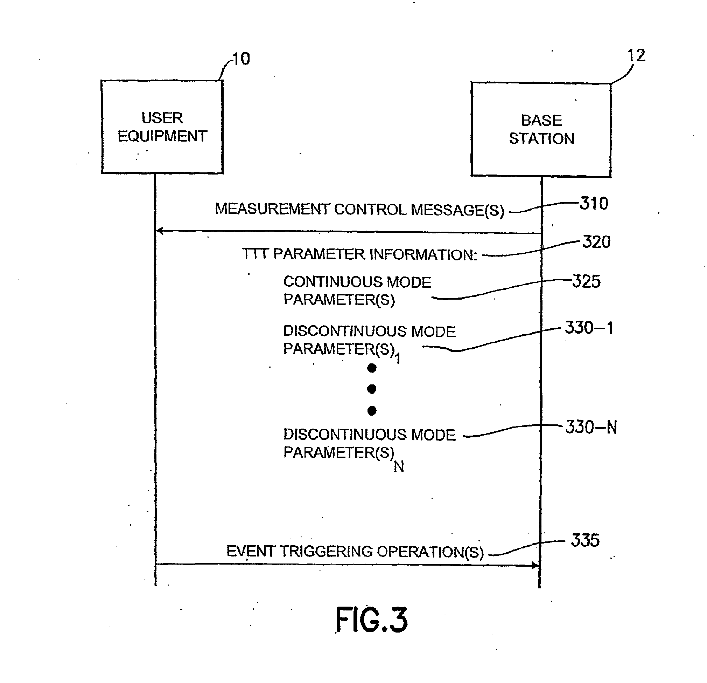

For instance, FIG. 3 illustrates exemplary communications between a base station and a user equipment in accordance with the described techniques. In FIG. 3, the base station 12 (e.g., as directed by controller 14) sends measurement control message(s) 310 to the user equipment 10. The measurement control message(s) include Time-to-Trigger parameter information 320, which in this example includes continuous mode parameter(s) 325 and a number of discontinuous mode parameters 330-1 through 330-N. The user equipment 10 could store the parameters 325 as the parameters 10F and the parameters 330 as parameters 10G. The continuous state parameter(s) 325 is used to define a time period 10H for a Time-to-Trigger used for a continuous state. Similarly, the discontinuous state parameter(s) 330 is used to define a time period 10J for a Time-to-Trigger used for a discontinuous state. The user equipment 10, when an event is triggered due to evaluation during these time periods 10H, 10J, performs some event triggering operation(s) 335. Such operations could include, e.g., measurement reporting, cell reselection operations, and handover operations.

One non-limiting example of an algorithm for defining the Time-to-Trigger parameter values for no discontinuous reception/transmission and discontinuous reception cycleₙ is now provided:
Time-to-Trigger (No discontinuous reception/transmission) = X ms, where the value of X is given in the measurement control message 310; and
Time-to-Trigger (discontinuous reception cycleₙ) = *a* * discontinuous reception cycleₙ ms, where the value of *a* is given in the measurement control message 310. The value of *a* is generally greater than one.

Further in accordance with the exemplary embodiments of this invention, when the user equipment 10 begins using a certain discontinuous reception cycle 230 after continuous reception and continuous measurements, the user equipment 10 may also automatically change the Time-to-Trigger value that the user equipment 10 uses in the event-triggered evaluation.

In the case of a non-regular discontinuous reception cycle 230 (e.g., the allocation table may include a jump-pointer to a next continuum in the allocation table reading or a sudden decrease in the interval between reception of allocation tables), some additional adjustment may need to be made for the Time-to-Trigger parameter value (e.g., corresponding to time period 10J) so that the user equipment 10 does not need to change its Time-to-Trigger parameter value unnecessarily often.

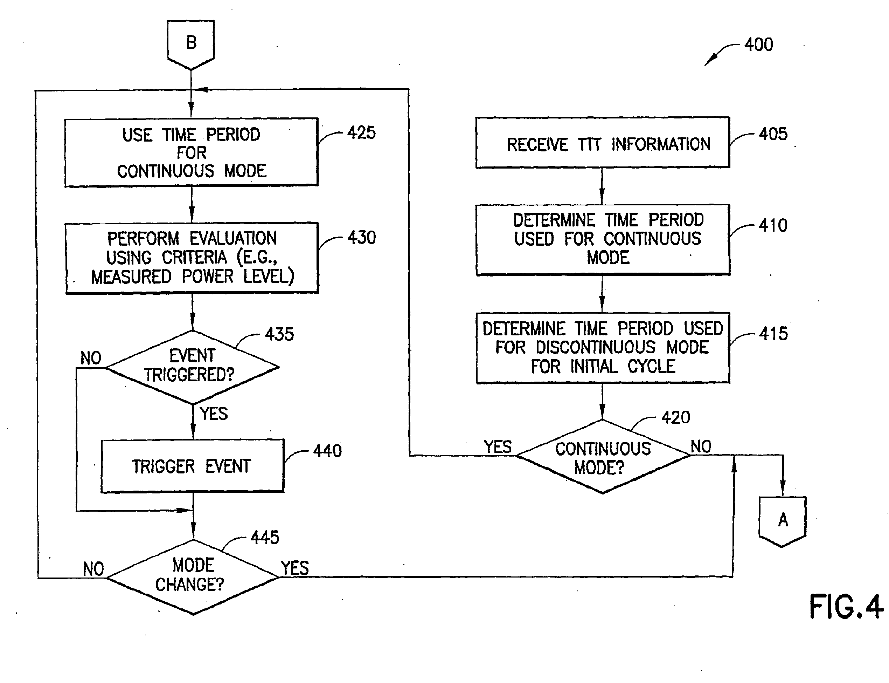

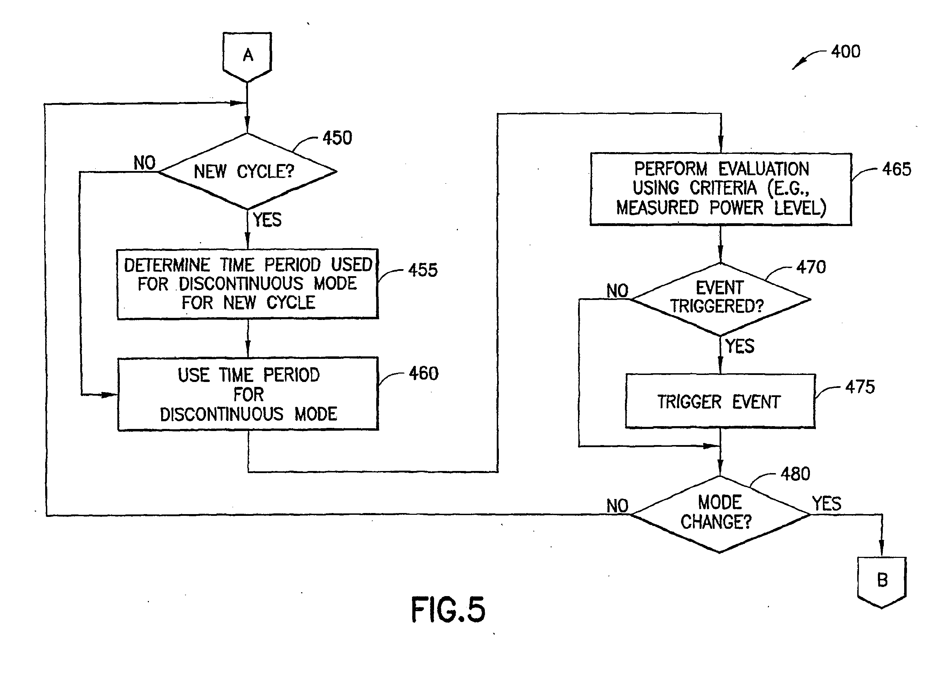

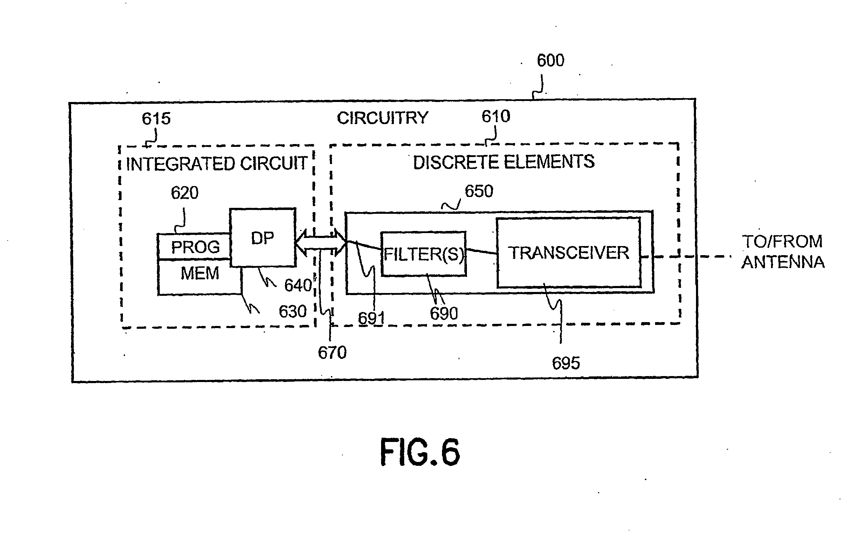

Turning to FIGS. 4 and 5, flowcharts are shown of an exemplary method 400 performed by a user equipment for automatically adjusting a time period used for event evaluation. Method 400 may be performed by program 10C in the user equipment 10 (but see also FIG. 6). In block 405, the user equipment 10 receives the Time-to-Trigger information. As shown in FIG. 3, the Time-to-Trigger information 320 is part of one or more measurement control messages 310, but FIG. 3 is merely one example. In block 410, the user equipment 10 uses the Time-to-Trigger information to determine a value of a Time-to-Trigger parameter for the continuous state. The value corresponds to, e.g., the time period 10H. In block 415, the user equipment 10 uses the Time-to-Trigger information 320 to determine a value of a Time-to- Trigger parameter for a discontinuous state for an initial discontinuous cycle. The value corresponds to, e.g., the time period 10J.

In block 420, it is determined if the user equipment is in a continuous mode of reception or transmission. A continuous mode may be considered equivalent to a continuous state of operation or any period during which reception/transmission occurs. If so (block 420 = YES), the Time-to-Trigger parameter value is used for the continuous mode in block 425. In block 430, evaluation is performed using measured power level. The evaluation uses a threshold 205 and a continuous power level measured at least partially during the time period (e.g., time period 10H) indicated by the value of the Time-to-Trigger parameter for a continuous state. It is noted that the threshold 205 is one of several possible criteria that might be used for evaluation. For instance, the evaluation could include examining how long the signal exists above and below the threshold and making determinations based on these times. If the evaluation indicates an event should be triggered (block 435 = YES), the event is triggered in block 440. If the evaluation does not indicate the event should be triggered (block 435 = NO), the method 400 continues in block 445.

In block 445, it is determined if there has been a change from the continuous mode to a discontinuous mode. If not (block 445 = NO), the method 400 continues in block 425. If so (block 445 = NO), the method continues in block 450. Block 450 may also be reached when there is no continuous mode (block 420 = NO).

In block 450, it is determined if there is a new discontinuous cycle (e.g., cycle 230). If so, anew value of a Time-to-Trigger for the new discontinuous cycle (and corresponding state) is determined using the Time-to-Trigger information. This occurs in block 455. In block 460, the value (e.g., indicating time period 10J) of the Time-to-Trigger for the discontinuous state is used. If there is no new cycle (block 450 = NO), the value of the Time-to-Trigger is used for the "old" discontinuous state in block 460.

In block 465, evaluation is performed using measured power level. The evaluation typically uses a threshold 205 and a sample power level measured at least partially during the time period (e.g., time period 10J) indicated by the value of the Time-to-Trigger parameter (e.g., parameter 330 or 10G) for a discontinuous state. The threshold 205 is only one possible criterion and other criteria may be used. If the evaluation indicates an event should be triggered (block 470 = YES), the event is triggered in block 470. If the evaluation does not indicate the event should be triggered (block 470 = NO), the method 400 continues in block 480.

In block 480, it is determined if there is a change from the discontinuous mode to the continuous mode. If so (block 480 = YES), the method 400 continues in block 425. Otherwise (block 480 = NO), the method continues in block 450.

One advantage of the use of the exemplary embodiments of this invention is that it can be assured that the user equipment 10 will always have some minimum number of measurements available of evaluation events for reporting, even if the user equipment 10 uses discontinuous reception for power saving purposes. This again assures that the content of the report (which is used on the network 1 side for decision making) will be at some minimum quality level. In an exemplary embodiment, the Time-to-Trigger parameter provides time domain hysteresis with different discontinuous reception cycles.

Further, it is not necessary for the network to send an update to the Time-to-Trigger time every time the discontinuous reception/transmission interval changes, and yet still the network 1 has knowledge of and control over the user equipment 10 reporting behavior. Additionally, by providing an adjustable Time-to-Trigger parameter one can avoid delaying handovers unnecessarily when the user equipment 10 is capable of performing accurate continuous neighbor cell measurements.

In general, the various embodiments may be implemented in hardware (e.g., special purpose circuits, logic) or software, or any combination thereof. For example, some aspects may be implemented in hardware, while other aspects may be implemented in software such as firmware which may be executed by a controller, microprocessor or other computing device, although the invention is not limited thereto. While various aspects of the invention may be illustrated and described as block diagrams, flow charts, or using some other pictorial representation, it is well understood that these blocks, apparatus, systems, techniques or methods described herein may be implemented in, as hardware and software.

Embodiments of the inventions may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

Programs, such as those provided by Synopsys, Inc. of Mountain View, California and Cadence Design, of San Jose, California automatically route conductors and locate components on a semiconductor chip using well established rules of design as well as libraries of pre-stored design modules. Once the design for a semiconductor circuit has been completed, the resultant design, in a standardized electronic format (e.g., Opus, GDSII, or the like) may be transmitted to a semiconductor fabrication facility or "fab" for fabrication.

As an example, in FIG. 6, circuitry is shown that is suitable for implementing embodiments of the disclosed invention. Circuitry 600 includes one or more data processors 640, one or more memories 630 including a program 620, a bus 670, and logic 650. In this example, logic 650 is part of discrete elements 610, and the data processor(s) 640 and one or more memories 630 are part of an integrated circuit 615. The logic 650 includes one or more filter(s) 690, e.g., used to create the filtered signal 691 (as shown in graph 215 of FIG. 2). The logic 650 also includes a transceiver 695 (e.g., transceiver 10D of FIG. 1), which is coupled to an antenna (not shown in FIG. 6) and the filter 690. The filter 690 may also be performed by program 620. Program 620 includes a set of instructions executable by the one or more data processors 640 to perform operations herein. The circuitry 600 could include multiple integrated circuits, and the logic 650 could be included on one of the integrated circuits.

Various modifications and adaptations falling within the scope of the claims may become apparent to those skilled in the relevant arts in view of the foregoing description, when read in conjunction with the accompanying drawings. For instance, although the techniques herein are now under discussion in 3GPP, the techniques are also applicable to other current or future systems and are not limited to the 3GPP.

Furthermore, some of the features of the various non-limiting embodiments of this invention may be used to advantage without the corresponding use of other features. As such, the foregoing description should be considered as merely illustrative of the principles, teachings and exemplary embodiments of this invention, and not in limitation thereof, the scope of the invention being defined by the claims.

## Claims

1. A method comprising:
determining a first time period (240) during which evaluation should be performed of whether a received radio frequency signal meets at least one criterion, the first time period (240) based at least partially on a second time period (230) of discontinuous reception or transmission;
performing the evaluation of the received radio frequency signal using measurements obtained within the first time period (240);
determining, based on the evaluation, whether an event should be triggered; and
triggering the event in response to the determination that the event should be triggered,
wherein said triggering the event comprises performing at least one of a measurement reporting operation, a cell reselection operation, or a handover operation.

2. The method of claim 1, wherein the second time period (230) corresponds to a time period of a discontinuous cycle.

3. The method of claim 2, further comprising modifying the first time period (240) in response to a modification of the second time period (230) of the discontinuous cycle.

4. The method of claim 2, further comprising receiving a plurality of parameters corresponding to a plurality of discontinuous cycles and selecting one of the parameters based on a current discontinuous cycle, and wherein determining the first time period (240) further comprises determining the first time period (240) using the selected parameter.

5. The method of claim 1, wherein the at least one criterion comprises a threshold and wherein performing the evaluation further comprises comparing the measurements to the threshold.

6. The method of claim 5, wherein the measurements comprise power level measurements.

7. The method of claim 1, further comprising receiving a parameter corresponding to the second time period (230), and wherein determining the first time period (240) further comprises determining the first time period (240) using the parameter.

8. The method of claim 7, wherein the parameter comprises a value and wherein determining the first time period (240) further comprises determining the first time period (240) by multiplying the value by a length of time corresponding to the second time period (230).

9. The method of claim 1, wherein:
the first time period (240) is used during a discontinuous mode;
performing the evaluation further comprises performing the evaluation in response to the discontinuous mode; and
the method further comprises:
determining a third time period (235) to be used during a continuous mode; and
performing in response to the continuous mode another evaluation of the received radio frequency signal using measurements obtained within the third time period (235).

10. The method of claim 9, further comprising receiving a parameter corresponding to the third time period, and wherein determining a third time period (235) further comprises determining the third time period (235) using the parameter.

11. A computer program product tangibly embodying a program of machine-readable instructions executable by a digital processing apparatus to perform operations comprising:
determining a first time period (240) during which evaluation should be performed of whether a received radio frequency signal meets at least one criterion, the first time period (240) based at least partially on a second time period (230) of discontinuous reception or transmission;
performing the evaluation of the received radio frequency signal using measurements obtained within the first time period (240);
determining, based on the evaluation, whether an event should be triggered; and
triggering the event in response to the determination that the event should be triggered,
wherein said triggering the event comprises performing at least one of a measurement reporting operation, a cell reselection operation, or a handover operation.

12. A computer program that when run on a computer performs the method of any one of claims 1 to 10.

13. An apparatus comprising:
means for determining a first time period (240) during which evaluation should be performed of whether a received radio frequency signal meets at least one criterion, the first time period (240) based at least partially on a second time period (230) of discontinuous reception or transmission,
means for performing the evaluation of the received radio frequency signal using measurements obtained within the first time period (240),
means for determining, based on the evaluation, whether an event should be triggered, and
means for triggering the event in response to the determination that the event should be triggered,
wherein said triggering the event comprises performing at least one of a measurement reporting operation, a cell reselection operation, or a handover operation.

14. The apparatus of claim 13, further comprising means for performing the method according to any one of claims 2-10.

15. The apparatus of claim 13 or claim 14 comprising a circuitry, wherein the circuitry comprises at least one integrated circuit, or at least one data processor coupled to at least one memory, or a transceiver having a connection suitable to connect an antenna and at least one filter coupled to the transceiver, the at least one filter producing a filtered signal used as the received radio frequency signal.

16. A method comprising:
in order to perform an evaluation of whether a received radio frequency signal meets at least one criterion, using a first time period (235) for performing the evaluation in a continuous mode and a second time period (240) for performing the evaluation in a discontinuous mode, wherein the second time period (240) is based at least partially on a discontinuous period of reception or transmission occurring in the discontinuous mode;
in response to being:in the continuous mode, performing the evaluation of the received radio frequency signal using measurements corresponding to the first time period (235);
in response to being in the discontinuous mode, performing the evaluation of the received radio frequency signal using measurements corresponding to the second time period (240);
determining, based on the evaluation, whether an event should be triggered; and
triggering the event in response to the determination that the event should be triggered,
wherein said triggering the event comprises performing at least one of a measurement reporting operation, a cell reselection operation, or a handover operation.

## Patentansprüche

1. Verfahren, das Folgendes aufweist:
Bestimmen einer ersten Zeitperiode (240), während der eine Evaluierung, ob ein empfangenes Hochfrequenzsignal mindestens ein Kriterium erfüllt, durchgeführt werden sollte, wobei die erste Zeitperiode (240) mindestens teilweise auf einer zweiten Zeitperiode (230) diskontinuierlichen Empfangs oder diskontinuierlicher Sendung basiert;
Durchführen der Evaluierung des empfangenen Hochfrequenzsignals unter Verwendung von Messungen, die innerhalb der ersten Zeitperiode (240) erhalten werden;
Bestimmen, ob ein Ereignis ausgelöst werden sollte, auf der Grundlage der Evaluierung; und
Auslösen des Ereignisses als Reaktion auf die Bestimmung, dass das Ereignis ausgelöst werden sollte,
wobei das Auslösen des Ereignisses das Durchführen von mindestens einem von einem Messberichtsvorgang, einem Zellenneuauswahlvorgang oder einem Handover-Vorgang aufweist.

2. Verfahren nach Anspruch 1, wobei die zweite Zeitperiode (230) einer Zeitperiode eines diskontinuierlichen Zyklus entspricht.

3. Verfahren nach Anspruch 2, das ferner das Ändern der ersten Zeitperiode (240) als Reaktion auf eine Änderung der zweiten Zeitperiode (230) des diskontinuierlichen Zyklus aufweist.

4. Verfahren nach Anspruch 2, das ferner das Empfangen mehrerer Parameter, die mehreren diskontinuierlichen Zyklen entsprechen, und das Auswählen von einem der Parameter auf der Grundlage eines gegenwärtigen diskontinuierlichen Zyklus aufweist, und wobei das Bestimmen der ersten Zeitperiode (240) ferner das Bestimmen der ersten Zeitperiode (240) unter Verwendung des ausgewählten Parameters aufweist.

5. Verfahren nach Anspruch 1, wobei das mindestens eine Kriterium einen Schwellenwert aufweist und wobei das Durchführen der Evaluierung ferner das Vergleichen der Messungen mit dem Schwellenwert aufweist.

6. Verfahren nach Anspruch 5, wobei die Messungen Leistungspegelmessungen aufweisen.

7. Verfahren nach Anspruch 1, das ferner das Empfangen eines Parameters aufweist, der der zweiten Zeitperiode (230) entspricht, und wobei das Bestimmen der ersten Zeitperiode (240) ferner das Bestimmen der ersten Zeitperiode (240) unter Verwendung des Parameters aufweist.

8. Verfahren nach Anspruch 7, wobei der Parameter einen Wert aufweist und wobei das Bestimmen der ersten Zeitperiode (240) ferner das Bestimmen der ersten Zeitperiode (240) durch Multiplizieren des Werts mit einer zeitlichen Länge aufweist, die der zweiten Zeitperiode (230) entspricht.

9. Verfahren nach Anspruch 1, wobei:
die erste Zeitperiode (240) während eines diskontinuierlichen Modus verwendet wird;
das Durchführen der Evaluierung ferner das Durchführen der Evaluierung als Reaktion auf den diskontinuierlichen Modus aufweist; und
das Verfahren ferner Folgendes aufweist:
Bestimmen einer dritten Zeitperiode (235), die während eines kontinuierlichen Modus zu verwenden ist; und
Durchführen einer anderen Evaluierung des empfangenen Hochfrequenzsignals unter Verwendung von Messungen, die innerhalb der dritten Zeitperiode (235) erhalten werden, als Reaktion auf den kontinuierlichen Modus.

10. Verfahren nach Anspruch 9, das ferner das Empfangen eines Parameters aufweist, der der dritten Zeitperiode entspricht, und wobei das Bestimmen einer dritten Zeitperiode (235) ferner das Bestimmen der dritten Zeitperiode (235) unter Verwendung des Parameters aufweist.

11. Computerprogrammprodukt, das greifbar ein Programm von maschinenlesbaren Befehlen ausführt, die durch eine digitale Verarbeitungsvorrichtung ausgeführt werden können, um Vorgänge durchzuführen, die Folgendes aufweisen:
Bestimmen einer ersten Zeitperiode (240), während der eine Evaluierung, ob ein empfangenes Hochfrequenzsignal mindestens ein Kriterium erfüllt, durchgeführt werden sollte, wobei die erste Zeitperiode (240) mindestens teilweise auf einer zweiten Zeitperiode (230) diskontinuierlichen Empfangs oder diskontinuierlicher Sendung basiert;
Durchführen der Evaluierung des empfangenen Hochfrequenzsignals unter Verwendung von Messungen, die innerhalb der ersten Zeitperiode (240) erhalten werden;
Bestimmen, ob ein Ereignis ausgelöst werden sollte, auf der Grundlage der Evaluierung; und
Auslösen des Ereignisses als Reaktion auf die Bestimmung, dass das Ereignis ausgelöst werden sollte,
wobei das Auslösen des Ereignisses das Durchführen von mindestens einem von einem Messberichtsvorgang, einem Zellenneuauswahlvorgang oder einem Handover-Vorgang aufweist.

12. Computerprogramm, das, wenn es auf einem Computer ausgeführt wird, das Verfahren nach einem der Ansprüche 1 bis 10 durchführt.

13. Vorrichtung, die Folgendes aufweist:
Mittel zum Bestimmen einer ersten Zeitperiode (240), während der eine Evaluierung, ob ein empfangenes Hochfrequenzsignal mindestens ein Kriterium erfüllt, durchgeführt werden sollte, wobei die erste Zeitperiode (240) mindestens teilweise auf einer zweiten Zeitperiode (230) diskontinuierlichen Empfangs oder diskontinuierlicher Sendung basiert,
Mittel zum Durchführen der Evaluierung des empfangenen Hochfrequenzsignals unter Verwendung von Messungen, die innerhalb der ersten Zeitperiode (240) erhalten werden,
Mittel zum Bestimmen, ob ein Ereignis ausgelöst werden sollte, auf der Grundlage der Evaluierung, und
Mittel zum Auslösen des Ereignisses als Reaktion auf die Bestimmung, dass das Ereignis ausgelöst werden sollte,
wobei das Auslösen des Ereignisses das Durchführen von mindestens einem von einem Messberichtsvorgang, einem Zellenneuauswahlvorgang oder einem Handover-Vorgang aufweist.

14. Vorrichtung nach Anspruch 13, die ferner Mittel zum Durchführen des Verfahrens nach einem der Ansprüche 2 bis 10 aufweist.

15. Vorrichtung nach Anspruch 13 oder 14, die Schaltungen aufweist, wobei die Schaltungen mindestens eine integrierte Schaltung oder mindestens einen Datenprozessor, der an mindestens einen Speicher gekoppelt ist, oder eine Sende-Empfangseinrichtung aufweisen, die eine Verbindung aufweist, die geeignet ist, um eine Antenne und mindestens ein Filter, das an die Sende-Empfangseinrichtung gekoppelt ist, zu verbinden, wobei das mindestens eine Filter ein gefiltertes Signal erzeugt, das als das empfangene Hochfrequenzsignal verwendet wird.

16. Verfahren, das Folgendes aufweist:
Verwenden einer ersten Zeitperiode (235) zum Durchführen der Evaluierung in einem kontinuierlichen Modus und einer zweiten Zeitperiode (240) zum Durchführen der Evaluierung in einem diskontinuierlichen Modus, um eine Evaluierung, ob ein empfangenes Hochfrequenzsignal mindestens ein Kriterium erfüllt, durchzuführen, wobei die zweite Zeitperiode (240) mindestens teilweise auf einer diskontinuierlichen Empfangs-oder Sendeperiode gründet, die in dem diskontinuierlichen Modus auftritt;
Durchführen der Evaluierung des empfangenen Hochfrequenzsignals unter Verwendung von Messungen, die der ersten Zeitperiode (235) entsprechen, als Reaktion auf das Sich-Befinden im kontinuierlichen Modus;
Durchführen der Evaluierung des empfangenen Hochfrequenzsignals unter Verwendung von Messungen, die der zweiten Zeitperiode (240) entsprechen, als Reaktion auf das Sich-Befinden im diskontinuierlichen Modus;
Bestimmen, ob ein Ereignis ausgelöst werden sollte, auf der Grundlage der Evaluierung; und
Auslösen des Ereignisses als Reaktion auf die Bestimmung, dass das Ereignis ausgelöst werden sollte,
wobei das Auslösen des Ereignisses das Durchführen von mindestens einem von einem Messberichtsvorgang, einem Zellenneuauswahlvorgang oder einem Handover-Vorgang aufweist.

## Revendications

1. Procédé, comprenant les étapes consistant à :
déterminer une première période de temps (240) au cours de laquelle il convient d'effectuer une évaluation visant à établir si un signal radiofréquence reçu remplit au moins un critère, la première période de temps (240) étant basée en partie au moins sur une deuxième période de temps (230) de réception ou d'émission discontinue ;
effectuer l'évaluation du signal radiofréquence reçu à l'aide de mesures obtenues au sein de la première période de temps (240) ;
déterminer, sur la base de l'évaluation, s'il convient de déclencher un événement ; et
déclencher l'événement s'il est déterminé qu'il convient de déclencher l'événement,
dans lequel ladite étape consistant à déclencher l'événement comprend l'étape consistant à réaliser au moins une opération parmi une opération de compte rendu de mesures, une opération de nouvelle sélection de cellule ou une opération de transfert intercellulaire.

2. Procédé selon la revendication 1, dans lequel la deuxième période de temps (230) correspond à une période de temps d'un cycle discontinu.

3. Procédé selon la revendication 2, comprenant en outre l'étape consistant à modifier la première période de temps (240) en réponse à une modification de la deuxième période de temps (230) du cycle discontinu.

4. Procédé selon la revendication 2, comprenant en outre les étapes consistant à recevoir une pluralité de paramètres correspondant à une pluralité de cycles discontinus et à sélectionneur l'un des paramètres sur la base d'un cycle discontinu en cours, et dans lequel l'étape consistant à déterminer la première période de temps (240) comprend en outre l'étape consistant à déterminer la première période de temps (240) à l'aide du paramètre sélectionné.

5. Procédé selon la revendication 1, dans lequel ledit au moins un critère comprend un seuil et dans lequel l'étape consistant à effectuer l'évaluation comprend en outre l'étape consistant à comparer les mesures au seuil.

6. Procédé selon la revendication 5, dans lequel les mesures comprennent des mesures de niveau de puissance.

7. Procédé selon la revendication 1, comprenant en outre l'étape consistant à recevoir un paramètre correspondant à la deuxième période de temps (230), et dans lequel l'étape consistant à déterminer la première période de temps (240) comprend en outre l'étape consistant à déterminer la première période de temps (240) à l'aide du paramètre.

8. Procédé selon la revendication 7, dans lequel le paramètre comprend une valeur et dans lequel l'étape consistant à déterminer la première période de temps (240) comprend en outre l'étape consistant à déterminer la première période de temps (240) en multipliant la valeur par une durée correspondant à la deuxième période de temps (230).

9. Procédé selon la revendication 1, dans lequel :
la première période de temps (240) est utilisée au cours d'un mode discontinu ;
l'étape consistant à effectuer l'évaluation comprend en outre l'étape consistant à effectuer l'évaluation en réponse au mode discontinu ; et
lequel procédé comprend en outre les étapes consistant à :
déterminer une troisième période de temps (235) à utiliser au cours d'un mode continu ; et
effectuer, en réponse au mode continu, une autre évaluation du signal radiofréquence reçu à l'aide de mesures obtenues au sein de la troisième période de temps (235).

10. Procédé selon la revendication 9, comprenant en outre l'étape consistant à recevoir un paramètre correspondant à la troisième période de temps, et dans lequel l'étape consistant à déterminer une troisième période de temps (235) comprend l'étape consistant à déterminer la troisième période de temps (235) à l'aide du paramètre.

11. Produit-programme d'ordinateur incorporant de manière tangible un programme d'instructions lisibles par machine exécutables par un appareil de traitement numérique pour réaliser des opérations consistant notamment à :
déterminer une première période de temps (240) au cours de laquelle il convient d'effectuer une évaluation visant à établir si un signal radiofréquence reçu remplit au moins un critère, la première période de temps (240) étant basée en partie au moins sur une deuxième période de temps (230) de réception ou d'émission discontinue ;
effectuer l'évaluation du signal radiofréquence reçu à l'aide de mesures obtenues au sein de la première période de temps (240) ;
déterminer, sur la base de l'évaluation, s'il convient de déclencher un événement ; et
déclencher l'événement s'il est déterminé qu'il convient de déclencher l'événement,
dans lequel ladite opération consistant à déclencher l'événement comprend la réalisation d'au moins une opération parmi une opération de compte rendu de mesures, une opération de nouvelle sélection de cellule ou une opération de transfert intercellulaire.

12. Programme d'ordinateur dont l'exécution sur un ordinateur met en oeuvre le procédé selon l'une quelconque des revendications 1 à 10.

13. Appareil, comprenant :
un moyen pour déterminer une première période de temps (240) au cours de laquelle il convient d'effectuer une évaluation visant à établir si un signal radiofréquence reçu remplit au moins un critère, la première période de temps (240) étant basée en partie au moins sur une deuxième période de temps (230) de réception ou d'émission discontinue,
un moyen pour effectuer l'évaluation du signal radiofréquence reçu à l'aide de mesures obtenues au sein de la première période de temps (240),
un moyen pour déterminer, sur la base de l'évaluation, s'il convient de déclencher un événement, et
un moyen pour déclencher l'événement s'il est déterminé qu'il convient de déclencher l'événement,
dans lequel ledit déclenchement de l'événement comprend la réalisation d'au moins une opération parmi une opération de compte rendu de mesures, une opération de nouvelle sélection de cellule ou une opération de transfert intercellulaire.

14. Appareil selon la revendication 13, comprenant en outre un moyen pour mettre en oeuvre le procédé selon l'une quelconque des revendications 2 à 10.

15. Appareil selon la revendication 13 ou la revendication 14, comprenant un montage de circuits, lequel montage de circuits comprenant au moins un circuit intégré ou au moins un processeur de données couplé à au moins une mémoire, ou un émetteur-récepteur doté d'un branchement permettant de brancher une antenne et au moins un filtre couplé à l'émetteur-récepteur, ledit au moins un filtre produisant un signal filtré jouant le rôle du signal radiofréquence reçu.

16. Procédé, comprenant les étapes consistant à :
dans le but d'effectuer une évaluation visant à établir si un signal radiofréquence reçu remplit au moins un critère, utiliser une première période de temps (235) pour effectuer l'évaluation dans un mode continu et une deuxième période de temps (240) pour effectuer l'évaluation dans un mode discontinu, laquelle deuxième période de temps (240) est basée en partie au moins sur une période discontinue de réception ou d'émission survenant dans le mode discontinu ;
en réponse à l'occupation du mode continu, effectuer l'évaluation du signal radiofréquence reçu à l'aide de mesures correspondant à la première période de temps (235) ;
en réponse à l'occupation du mode discontinu, effectuer l'évaluation du signal radiofréquence reçu à l'aide de mesures correspondant à la deuxième période de temps (240) ;
déterminer, sur la base de l'évaluation, s'il convient de déclencher un événement ; et
déclencher l'événement s'il est déterminé qu'il convient de déclencher l'événement,
dans lequel ladite étape consistant à déclencher l'événement comprend l'étape consistant à réaliser au moins une opération parmi une opération de compte rendu de mesures, une opération de nouvelle
sélection de cellule ou une opération de transfert intercellulaire.
